# EUROPEAN PATENT APPLICATION

(11) **EP 2 532 226 A1**
(43) Date of publication of application: **12.12.2012**
(21) Application number: 11740102.6
(22) Date of filing: 04.02.2011
(51) Int. Cl.: A01G 17/06

(54) **METHOD AND DEVICE FOR THE MECHANIZED CULTIVATION OF AGRICULTURAL ESPALIERS**

(30) Priority: 05.02.2010 RU 2010104019
(71) Applicant: Sazhanov, Valery Evgenevich, Krasnodarsky kray 350059 (RU)
(72) Inventor: Sazhanov, Valery Evgenevich, Krasnodarsky kray 350059 (RU)
(74) Representative: Spengler, Robert
(86) International application number: PCT/RU2011/000067
(87) International publication number: WO 2011/096849

(57) **Abstract**

Invention belongs to the sphere of plant cultivation and is designed to improve efficiency of mechanized cultivating of agricultural espalier cultures. The solution of the mentioned problem can be achieved by applying the claimed method of mechanized cultivation when the cultivating mechanisms use espaliers as a support while moving due to which the direct impact of the movers of the cultivating equipment on soil is excluded.

## Description

Invention relates to the sphere of plant cultivation and designed to improve efficiency of mechanized cultivating of agricultural espalier cultures particularly in winegrowing.

In the course of the technology development the method of cultivating certain plants, so called espalier cultures, was found, it consists in using of espaliers to support and locate overground part of plants, they (pales, posts) are installed in rows and the wire fixed and strained in several rows for plant stalk to be supported with it. There are several espalier types known: vertical, biplanar, with canopy, pergola like (Negrul A. M. and others., «Ampelography with the basics of viticulture», M., «Vysshaya Shkola», 1979). As applied to mechanized cultivation, vertical monoplanar espaliers with wide raw-spacing between them, along which cultivating mechanisms (combines, tractors with mounted and trailed implement) move are most widely spread.

Disadvantage of the method of espalier cultures cultivating is that while moving between the rows the wheels (caterpillars or other movers) of the cultivating mechanisms cause compacting and structure destroying impact on soil. To compensate such negative impact it is necessary to perform periodical deep loosening of the soil, real tillage. The fact that the width of the raw-spacing must be big enough and cannot be decreased substantially as it is restricted by the dimensions of cultivating equipment should also be considered as disadvantage. The consequence of impossibility to decrease raw-spacing width is lower density of planting thus part of the soil area is inefficiently used.

Objective of the invention is to decrease productivity and general efficiency of mechanized cultivating of agricultural espalier cultures.

Technical result of the invention is to prevent negative impact on soil by the wheels (movers) of cultivating mechanisms.

The mentioned problem can be solved by applying the claimed method of mechanized cultivation when the cultivating mechanisms use espaliers as a support while moving, due to which the direct impact of the movers of the cultivating equipment on the soil is excluded. The support for cultivating mechanisms is the top rows of wires or wire ropes, fixed on the top of posts. Cultivating mechanisms are equipped with flanged wheels which make it possible for them to move on the wires (wire ropes). Another possibility is to use posts as a support on which cultivating mechanisms travel with the help of walking mover. In the second case tops of the posts are equipped with cup catches facilitating the walking mover in finding the support. Another variant is also possible when the tops of the posts are pointed and the supports of the walking mover are cup-shaped. Operating units of the cultivating machines perform necessary agro-technical operations on the plants on-the-run (e.g. cutting) and on soil (mulching).

It is possible to achieve the technical result of the invention only by means of moving the cultivating mechanisms on espaliers which allows eliminating direct impact of movers on soil.

On figure the claimed method of cultivating agricultural espalier cultures is shown, including espalier 1 consisting of posts 2, wires 3 to fix stalks 4, carrying wire cables 5, cultivating mechanism 6, consisting of a power unit 7, controlling unit 8, flanged wheels 9, operating units 10. Posts 2 are installed in rows, wires 3 are fixed on posts 2 in several tiers and strained. Stalks 4 are attached and supported by wires 3. Carrying wire cables 5 are fixed on the top of posts 2 and strained. Flanged wheels 9 are installed on cultivating mechanism 6 with capacity to transmit torque moment from power unit 7. Flanged wheels 9 are supported by the carrying wire cables 5, providing cultivating mechanism 6 with the capacity to travel along espaliers 1. Operating units 10 are mounted on cultivating mechanism 6 with the capacity to be driven by power unit 7. Control unit 8 is mounted on cultivating mechanism 6 with the capacity to control power unit 7, operating units 10 and the capacity to control moving of cultivating mechanism 6 on carrying wire cables 5. Cultivating agricultural espalier cultures by means of the claimed method is performed in the following way. Cultivating mechanism 6 with the help of wheels 9, supported by carrying wire cables 5, travels along espaliers 1. Operating units 10 perform necessary agro-technical operations on the stalks of the plants 4 (e.g. cutting) or on the soil (e.g. mulching) while cultivating mechanism 6 is moving. Driving of wheels 9 and operating units 10 is executed by transmission from power unit 8, which can be, for example, an internal-combustion engine. Drive control is performed by control unit 8, which can be, for example, a microprocessor.

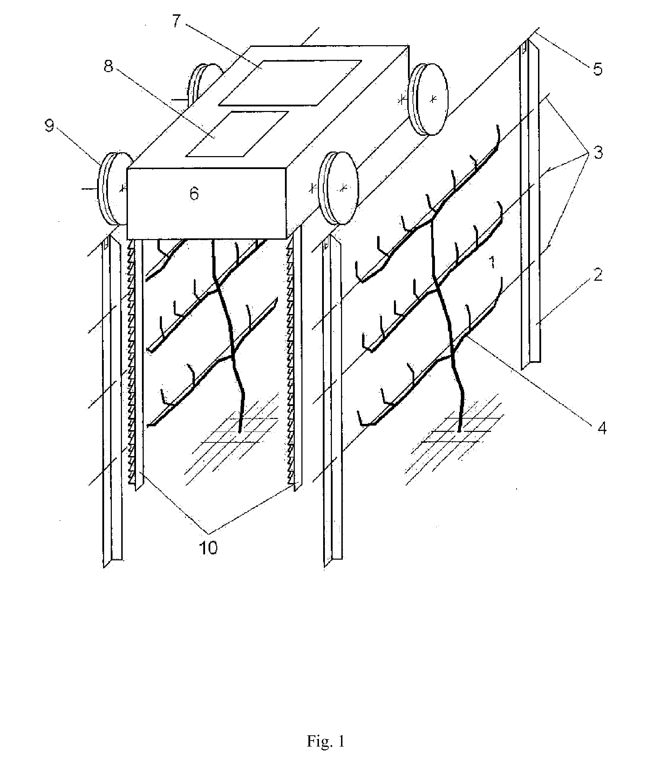

## Claims

1. Method of mechanized cultivating agricultural espalier cultures, including espaliers and operating mechanisms moving along espaliers, the difference of which consists in the movement of operating mechanism supported with espaliers.

2. Espalier for realizing the method according to claim 1, **characterized in that** it equipped with at least one linear bearing element (e.g. cable), which is a support for the engine of the cultivating mechanism.

3. Espalier for realizing the method according to claim 1, **characterized in that** the top parts of the posts are cup-shaped catches which serve as a support for propulsive device of the cultivating mechanism.

4. Espalier for realizing the method according to claim 1, **characterized in that** the tops of posts are pointed and serve as a support for cup-shaped catches of propulsive device of the cultivating mechanism.
